(19) Europäisches Patentamt
European Patent Office
Office européen des brevets

(11) EP 4 737 091 A1

(12) **EUROPEAN PATENT APPLICATION**
published in accordance with Art. 153(4) EPC

(43) Date of publication:
06.05.2026 Bulletin 2026/19

(21) Application number: 24831956.8

(22) Date of filing: 25.06.2024

(51) International Patent Classification (IPC):
*B29C 43/58* (2006.01)    *B29C 43/34* (2006.01)

(52) Cooperative Patent Classification (CPC):
B29C 43/34; B29C 43/58

(86) International application number:
PCT/JP2024/023061

(87) International publication number:
WO 2025/005096 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 JP 2023105271

(71) Applicant: Daikin Industries, Ltd.
Osaka-shi, Osaka 530-0001 (JP)

(72) Inventors:
• IMAMURA, Hitoshi
Osaka-Shi, Osaka 530-0001 (JP)

• YAMAZAKI, Keiko
Osaka-Shi, Osaka 530-0001 (JP)
• HAMADA, Hiroyuki
Osaka-Shi, Osaka 530-0001 (JP)
• FUNAOKA, Misato
Osaka-Shi, Osaka 530-0001 (JP)
• MUKAI, Eri
Osaka-Shi, Osaka 530-0001 (JP)
• FUJISAWA, Manabu
Osaka-Shi, Osaka 530-0001 (JP)

(74) Representative: Hoffmann Eitle
Patent- und Rechtsanwälte PartmbB
Arabellastraße 30
81925 München (DE)

(54) **MOLDED POLYCHLOROTRIFLUOROETHYLENE OBJECT AND PRODUCTION METHOD THEREFOR**

(57) Provided is a formed article including polychlorotrifluoroethylene, wherein the polychlorotrifluoroethylene has a melting point of 211 to 216°C, and the formed article has a projected area of 1,000 mm² or more, a thickness of 25 to 50 mm, and a degree of crystallinity of 65% or less.

Figure 1

EP 4 737 091 A1

**Description**

TECHNICAL FIELD

The present disclosure relates to a formed article of polychlorotrifluoroethylene and a method for producing the same.

BACKGROUND ART

Patent Document 1 discloses a thermoplastic copolymer consisting essentially of chlorotrifluoroethylene and containing 0.5 to 6 mol% of vinylidene fluoride.

RELATED ART

PATENT DOCUMENTS

Patent Document 1: U.S. Patent No. 2738343

SUMMARY OF THE INVENTION

PROBLEM TO BE SOLVED BY THE INVENTION

An object of the present disclosure is to provide a formed article which is less likely to develop cracks even when tightened with strong force. Another object of the present disclosure is to provide a method for producing a formed article which is less likely to develop cracks even when tightened with strong force.

MEANS FOR SOLVING THE PROBLEM

According to the present disclosure, a formed article comprising a polychlorotrifluoroethylene, wherein the polychlorotrifluoroethylene has a melting point of 211 to 216°C, and the formed article has a projected area of 1,000 mm$^2$ or more, a thickness of 25 to 50 mm, and a degree of crystallinity of 65% or less is provided.

EFFECTS OF INVENTION

According to the present disclosure, a formed article which is less likely to develop cracks even when tightened with strong force can be provided. Furthermore, according to the present disclosure, a method for producing a formed article which is less likely to develop cracks even when tightened with strong force can be provided.

BRIEF DESCRIPTION OF DRAWINGS

Figure 1 is a graph plotting the temperature of a heater and heating time in the method for producing the formed articles of Experimental Examples 1 to 6 and Comparative Examples 1 to 3.
Figure 2 is a schematic diagram illustrating a crack resistance test method. Fig. 2(a) is a front schematic view of a sample sheet clamped between a bolt, washer, and nut. Fig. 2(b) is a top schematic view of a sample sheet clamped between a bolt, washer, and nut.

DESCRIPTION OF EMBODIMENTS

Hereinafter, specific embodiments of the present disclosure will be described in detail; however, the present disclosure is not limited to the following embodiments.
Patent Document 1 discloses that although polychlorotrifluoroethylene containing 0.5 to 6 mol% of vinylidene fluoride exhibits the chemical and physical properties of a homopolymer of chlorotrifluoroethylene, the resulting film has high gloss, smoothness, and reduced brittleness.
A homopolymer of chlorotrifluoroethylene (CTFE) has the advantage of being formable with high dimensional accuracy as compared with copolymers of CTFE described in Patent Document 1. However, it has been found that when formed into a thick formed article having a large projected area, the resulting formed article tends to crack under a large tightening force.

As a result of intensive studies to solve the above problem, it has now been found that by selecting polychlorotrifluoroethylene (PCTFE) having a specific melting point and adjusting the degree of crystallinity of the formed article to fall within a specific range, a formed article having a large projected area and thick wall, or a thin-walled portion machined from the formed article, which is less likely to develop cracks even when tightened with strong force can be obtained, even when the PCTFE contains a homopolymer of CTFE.

That is, the formed article of the present disclosure comprises PCTFE, wherein the PCTFE has a melting point of 211 to 216°C, and the formed article has a projected area of 1,000 $mm^2$ or more, a thickness of 25 to 50 mm, and a degree of crystallinity of 65% or less.

Next, the formed article of the present disclosure will be described in detail.

(Formed Article)

The formed article of the present disclosure is a thick formed article having a large projected area.

The projected area of the formed article is 1,000 $mm^2$ or more, preferably 5,000 $mm^2$ or more, more preferably 10,000 $mm^2$ or more, still more preferably 50,000 $mm^2$ or more, and particularly preferably 100,000 $mm^2$ or more. The upper limit of the projected area may be, for example, 300,000 $mm^2$ or less. If the projected area of the formed article is too small, cracks are less likely to occur in the formed article, but it becomes difficult to use the formed article in certain applications such as turntables of semiconductor cleaning apparatuses for installing large wafers.

In the formed article of the present disclosure, the projected area refers to the projected area of the formed article when viewed in the thickness direction of the formed article.

The thickness of the formed article is 25 to 50 mm, preferably 47 mm or less, and more preferably 44 mm or less. If the formed article is too thick, it becomes difficult to reduce the degree of crystallinity of the formed article, and the article tends to develop cracks. If the formed article is too thin, cracks are less likely to occur in the formed article, but it becomes difficult to use the formed article in certain applications such as turntables of semiconductor cleaning apparatuses for installing large wafers.

The degree of crystallinity of the formed article is 65% or less, and preferably 40% or more, and more preferably 52% or more.

Since the formed article of the present disclosure is a PCTFE formed article having a relatively large projected area, it is generally formed by compression molding. When such a thick PCTFE formed article having a large projected area is produced by compression molding under conventional conditions, the resulting formed article tends to develop cracks when tightened with strong force. Surprisingly, it has been found that a formed article in which the degree of crystallinity has been adjusted to fall within the above range is less likely to develop cracks even when tightened with strong force.

The degree of crystallinity of the formed article can be calculated from the specific gravity of the formed article measured by the water displacement method using the following equation:

Degree of crystallinity (%) = {(Specific gravity - 2.072) / (2.183 - 2.072)} $\times$ 100

The formed article of the present disclosure contains PCTFE. PCTFE may be a homopolymer of chlorotrifluoroethylene, or a copolymer of CTFE and a monomer copolymerizable with CTFE.

Examples of monomers copolymerizable with CTFE include ethylene, vinylidene fluoride, tetrafluoroethylene, hexafluoropropylene, fluoro(alkyl vinyl ether), (perfluorobutyl)ethylene, (perfluorohexyl)ethylene, perfluoro(1,1,2-trihydro-1-hexene), and perfluoro(1,1,5-trihydro-1-pentene).

The content of CTFE units in PCTFE is preferably 90 to 100 mol%, more preferably 98 to 100 mol%, still more preferably 99 to 100 mol%, and particularly preferably 99.9 to 100 mol%. The higher the content of CTFE units in PCTFE, the better the properties of the formed article such as mechanical properties, dimensional stability, chemical resistance, chemical solution low permeability, and low gas permeability.

The monomeric composition of PCTFE can be measured by the $^{19}$F-NMR method.

In one embodiment, PCTFE is a homopolymer of CTFE. The homopolymer of CTFE is a polymer substantially containing only CTFE units, preferably a polymer containing 99.9 to 100 mol% of CTFE units, and more preferably a polymer containing only of CTFE units. The formed article of the present disclosure is less likely to develop cracks even when it contains a homopolymer of CTFE as PCTFE.

The melting point of PCTFE is 211 to 216°C. The melting point of PCTFE can be adjusted by controlling the monomeric composition of PCTFE. A homopolymer of CTFE usually has a melting point within the above range.

The melting point of PCTFE can be measured using a differential scanning calorimeter (DSC).

The flow value of PCTFE measured at 230°C is preferably $2.0 \times 10^{-3}$ ml/sec or less, preferably $1.0 \times 10^{-4}$ ml/sec

or more, and more preferably $1.0 \times 10^{-3}$ ml/sec or more.

The above flow value is the flow value of the PCTFE forming the formed article. Thus, the above flow value may differ from the flow value of PCTFE as a raw material used for producing a PCTFE-containing formed article having the abovementioned size.

The flow value of PCTFE can be measured using Koka-type flow tester under conditions of 230°C, a load of 980 N (100 kg), and a nozzle diameter of 1 mm$\phi$. The flow value of PCTFE is the volume of PCTFE extruded per second from the nozzle.

The formed article of the present disclosure may be obtained by machining a compression molded article obtained by compression molding into a desired shape using known methods such as cutting.

The formed article of the present disclosure has excellent chemical resistance and mechanical properties and is less likely to develop cracks even when tightened with strong force. Therefore, the formed article of the present disclosure can be suitably used as a component in semiconductor manufacturing apparatuses, in particular, a component fixed to the apparatus by using screw parts such as bolts and nuts made of PCTFE. For example, the formed article of the present disclosure may be suitably used as a turntable for processing silicon wafers, peripheral components such as wafer guides, silicon wafer cleaning guides, couplers for chemical solution piping, valves, joints, and valve seats such as low temperature valve seats for LNG transport vessels. Examples of turntables include a turntable in semiconductor cleaning apparatuses.

The formed article of the present disclosure can be suitably produced by the method of the present disclosure. Next, the method of the present disclosure will be described in detail.

(Method for producing formed article)

In the method of the present disclosure, a formed article having a projected area of 1,000 mm$^2$ or more and a thickness of 25 to 50 mm is produced. When such a thick PCTFE formed article having a large projected area is produced by compression molding under conventional conditions, the resulting formed article tends to develop cracks when tightened with strong force.

In the method of the present disclosure, a mold for obtaining a formed article of the above size is heated by a heater, PCTFE is charged into the mold, and the PCTFE in the mold is compression molded to obtain a formed article. At this time, by setting the temperature of the heater to 290 to 325°C and adjusting the heating time by the heater and the temperature of the heater so as to satisfy the relational expression (X), an increase in the degree of crystallinity of the obtained formed article can be suppressed, and as a result, the occurrence of cracks can be suppressed. The step of heating the mold by the heater and the step of charging PCTFE into the mold may be carried out in any order. That is, in the method of the present disclosure, PCTFE may be charged into a mold after the mold has been heated by the heater, or a mold charged with PTFE may be heated by the heater after charging PCTFE into the mold.

The temperature of the heater is 290 to 325°C, preferably 292°C or more, more preferably 294°C or more, and preferably 323°C or less, more preferably 321°C or less. The temperature of the heater refers to the set temperature of a heater (preferably a heating wire) disposed inside or outside the mold. In one embodiment, a hot-air circulation oven in which the temperature of the heater is set within the above range is used to heat the mold.

In the method of the present disclosure, the heating time by the heater and the temperature of the heater are adjusted so as to satisfy the following relational expression (X) :

(Heating time by heater (min)) < [1176 - 3.31 $\times$ (Temperature of heater (°C))].  Expression (X):

In the method of the present disclosure, it is preferable that the heating time by the heater and the temperature of the heater are adjusted so as to satisfy the following relational expression (X):

Expression (X): (Heating time by heater (min)) < [1160 - 3.31 $\times$ (Temperature of heater (°C))]  Expression X:

The "heating time by the heater" in the relational expression (X) specifically refers to the time from placing a mold for compression molding charged with PCTFE raw material in an oven capable of heating to a predetermined temperature by the heater to heating for a predetermined period, and then removing the mold from the oven. When a hot press equipped with a heater is used instead of an oven, the heating time is the time from heating for a predetermined period by the hot press to moving the mold to a cooling press.

Compression molding of PCTFE can be carried out by setting the temperature of the heater of an oven such as a hot-air circulation oven to a predetermined temperature within the range of 290 to 325°C, placing a mold charged with PCTFE raw material in the oven to heat and melt the PCTFE raw material, then taking the mold out of the oven after heating for a predetermined period, and cooling the PCTFE in the mold under compression with a separately prepared compression press. Cooling may be by air cooling or water cooling, but cooling under pressure is preferred because it can remove bubbles, prevent generation of voids, and prevent deformation or cracking of the formed article. Although the mold may be preheated before charging the raw material, from the viewpoint of prevention of contamination of raw material and operational safety, it is preferable to charge the raw material into a mold at room temperature in a clean environment.

Alternatively, instead of a hot-air circulation oven, PCTFE may be heated and melted using a hot press equipped with a heater, and after heating and melting of PCTFE, the mold may be moved to a cooling press for cooling under pressure. However, when the mold is large, it is more preferable to heat and melt PCTFE in a hot-air circulation oven because complete melting can be achieved in a short time, thereby avoiding thermal degradation such as an increase in flow value. If excessive burr formation due to the mold results in a thinner formed article, the thickness of the formed article can be adjusted by charging several percent to about 10% more raw material than the calculated filling amount.

The heating time by the heater is, for example, 30 to 240 minutes, preferably 40 minutes or more, and 230 minutes or less.

The pressure applied to the PCTFE in the mold is, for example, 3 to 50 MPa. The pressure applied to the PCTFE in the mold may be gradually increased.

In one embodiment of the method of the present disclosure, compression molding is performed such that the rate of change in flow value of PCTFE calculated by the following equation is 3.0 or less:

$$\text{Rate of change in flow value} = (F_1 - F_0) \ / \ F_0$$

$F_0$: Flow value of PCTFE before being charged into the mold (raw material flow value)
$F_1$: Flow value of PCTFE forming the formed article (formed article flow value)

The flow value of PCTFE before being charged into the mold and the flow value of PCTFE forming the formed article can both be measured by the above-described method.

By performing compression molding while suppressing an increase in the rate of change in the flow value of PCTFE, the mechanical properties of the formed article can be easily adjusted within the above range, and as a result, occurrence of cracks can be suppressed. The rate of change in the flow value of PCTFE can be suppressed to a low level by appropriately adjusting the size of the formed article, the heating time by the heater, and the temperature of the heater.

The flow value of PCTFE measured at 230°C before being charged into the mold (raw material flow value) is preferably $1.0 \times 10^{-4}$ ml/sec or more, more preferably $4.0 \times 10^{-4}$ ml/sec or more, and preferably $1.0 \times 10^{-3}$ ml/sec or less, and more preferably $8.0 \times 10^{-4}$ ml/sec or less.

The shape of the PCTFE charged into the mold is not particularly limited, and may be in the form of powder, granules, tablets, or pellets.

In the method of the present disclosure, a formed article can be obtained by cooling PCTFE in the mold while compression molding the PCTFE, and then removing the PCTFE formed article from the mold. By cooling PCTFE in the mold, the PCTFE in the mold is cooled and solidified, and a formed article is obtained. Examples of cooling methods include known methods such as natural cooling in air at room temperature (air cooling), forced cooling with cold air (air cooling), and forced cooling with water (water cooling). Air cooling is preferred as the cooling method, and forced cooling with cold air is more preferred, because even a thick formed article having a large projected area can be cooled while being compressed by a compression press, and occurrence of cracks can be suppressed. From the viewpoint of facilitating reduction of the degree of crystallinity, water cooling is preferred. However, in the case of a large formed article, if cooling is started too early, cracks may occur in the formed article due to shrinkage stress induced by solidification, and caution should be exercised. In order to avoid the occurrence of cracks, for example, the formed article may be air-cooled to a temperature slightly below the melting point of PCTFE and then rapidly cooled to 150°C or lower by water cooling. Since PCTFE crystallizes rapidly in the temperature range of 160 to 190°C, rapid cooling within this temperature range can further suppress crystallization. When water cooling is started at the time when the temperature of the formed article reaches 190 to 200°C by air cooling, the degree of crystallinity can be further suppressed, but it is preferable to select the timing of water cooling in consideration of the temperature distribution of the formed article.

While embodiments have been described above, it will be understood that various modifications and variations can be made without departing from the spirit and scope of the claims.

<1> A first aspect of the present disclosure provides a formed article comprising a polychlorotrifluoroethylene, wherein the polychlorotrifluoroethylene has a melting point of 211 to 216°C, and the formed article has a projected area of 1,000 mm$^2$ or more, a thickness of 25 to 50 mm, and a degree of crystallinity of 65% or less.

<2> A second aspect of the present disclosure provides the formed article according to the first aspect, wherein the polychlorotrifluoroethylene is a homopolymer of chlorotrifluoroethylene.

<3> A third aspect of the present disclosure provides the formed article according to the first or second aspect, wherein the flow value of the polychlorotrifluoroethylene measured at 230°C is $2.0 \times 10^{-3}$ ml/sec or less.

<4> A fourth aspect of the present disclosure provides the formed article according to any one of the first to third aspects, wherein the formed article is a turntable of a semiconductor cleaning apparatus.

<5> A fifth aspect of the present disclosure provides the formed article according to any one of the first to fourth aspects, wherein the formed article has a projected area of 10,000 to 300,000 $mm^2$, a thickness of 25 to 44 mm, and a degree of crystallinity of 52 to 65%, and the flow value of the polychlorotrifluoroethylene measured at 230°C is $1.0 \times 10^{-3}$ to $2.0 \times 10^{-3}$ ml/sec.

<6> A sixth aspect of the present disclosure provides a method for producing the formed article according to any one of the first to fifth aspects, the method comprising:

heating a mold with a heater, charging the polychlorotrifluoroethylene into the mold, and compression molding the polychlorotrifluoroethylene in the mold to obtain the formed article, wherein the temperature of the heater is set to 290 to 325°C, and the heating time by the heater and the temperature of the heater are adjusted so as to satisfy the following relational expression (X):

(Heating time by heater (min)) < [1176 - 3.31 × (Temperature of heater (°C))].          Expression (X):

<7> A seventh aspect of the present disclosure provides the method according to the sixth aspect, wherein a rate of change in flow value calculated by the following equation is 3.0 or less:

$$\texttt{Rate of change in flow value = } (F_1 - F_0) \texttt{ / } F_0$$

$F_0$: Flow value of the polychlorotrifluoroethylene before being charged into the mold
$F_1$: Flow value of the polychlorotrifluoroethylene forming the formed article.

EXAMPLES

Next, embodiments of the present disclosure will be described by way of Examples; however, the present disclosure is not limited to such Examples.

The numerical values of Experimental Examples were obtained by measurement according to the following methods. Experimental Examples were evaluated by the following methods.

(Flow Value)

Using Koka-type flow tester CFT-500D (manufactured by Shimadzu Corporation), under the conditions of 230°C, a load of 980 N (100 kg), and a nozzle diameter of 1 mmϕ, the flow value of PCTFE before being charged into the mold (raw material flow value ($F_0$)) and the flow value of PCTFE forming the formed article (formed article flow value ($F_1$)) were determined.

(Rate of Change in Flow Value)

Using the raw material flow value ($F_0$) and the formed article flow value ($F_1$) determined by the above method, the rate of change in flow value was calculated by the following equation:

$$\texttt{Rate of change in flow value = } (F_1 - F_0) \texttt{ / } F_0$$

(Melting Point)

Using a differential scanning calorimeter (trade name: X-DSC7000, manufactured by Hitachi High-Tech Science Corporation), the melting point was determined as the temperature corresponding to the maximum value in the melting curve obtained when the temperature was raised at a rate of 10°C/ minute.

(Crack Resistance Test)

From a PCTFE formed article, a plate of 50 mm square was cut and reduced into a thickness of 1 mmt, and then a hole of 12 mmϕ was made in the center to prepare a sample sheet 1.

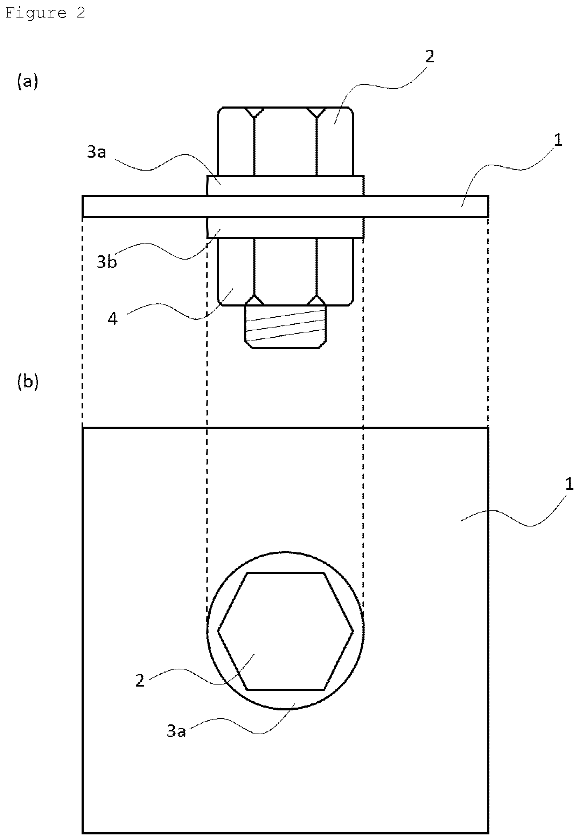

As shown in Fig. 2, a metal hexagonal bolt 2 of size M10 (JIS B1175 (1988), outer diameter 10 mmϕ), metal flat washers 3a and 3b (diameter 20 mm$\phi$, hole diameter 12 mm$\phi$, thickness 1 mm), and a metal hexagonal nut 4 of size M10 were fixed to the hole of the sample sheet 1. The bolt 2 and nut 4 were tightened with a torque wrench until the torque reached a maximum of 3.7 N · m. After keeping the sample sheet clamped between the bolt, washers, and nut for 24 hours, the bolt, washers, and nut were removed from the sample sheet. The surface of the sample sheet clamped by the washers was observed with a magnifier and evaluated according to the following criteria:

N: No cracks were observed
Y: Cracks were observed.

The torsional breaking torque of commercially available PCTFE bolts is 3.7 N · m. Therefore, the PCTFE formed article in which no cracks are observed in the above crack resistance test is a PCTFE formed article that does not develop cracks even when tightened with strong force using a PCTFE bolt.

(Specific Gravity)

The specific gravity was measured by the water displacement method.

(Degree of Crystallinity)

Using the specific gravity determined by the above method, the degree of crystallinity was calculated by the following equation:

Degree of crystallinity (%) = {(Specific gravity - 2.072) / (2.183 - 2.072)} $\times$ 100

PCTFE having the following physical properties was used.

PCTFE (1):

Composition: CTFE 100 mol%
Raw material flow value ($F_0$): 7.0 $\times$ $10^{-4}$ ml/sec
Melting point: 212°C

PCTFE (2):

Composition: CTFE 100 mol%
Raw material flow value ($F_0$): 5.0 $\times$ $10^{-4}$ ml/sec
Melting point: 214°C

Experimental Example 1

A mold composed of a cylindrical part having an inner diameter of 120 mm, an outer diameter of 160 mm, and a height of 60 mm, and bottom and top plates each having an outer diameter of 118 mm and a thickness of 15 mm, was prepared. The mold was made of carbon steel, and the resin contact surface was hard-chrome plated.
As a raw material, 606 g of PCTFE (1) was weighed and charged into the mold.
After raising the temperature of a hot-air circulation oven to 320°C, the mold filled with the raw material was placed in the oven. After heating for 40 minutes, the mold was taken out, and the hydraulic gauge pressure of a compression press was gradually increased to 3 to 20 MPa to remove bubbles. The pressure was then increased to 20 to 50 MPa, and the formed article was air-cooled while maintaining the pressure to prevent formation of voids during solidification. After cooling, the pressure was released, and the mold was removed from the compression press. The formed article was then taken out from the mold using a simple hand press. The obtained formed article had a projected area of 11,304 mm$^2$ and a thickness of 25 mm. The presence or absence of cracks in the formed article was visually checked, and no cracks were observed.
Next, a part of the formed article was cut, and the flow value was measured. The result was 1.7 $\times$ $10^{-3}$ ml/sec, and the rate of change from the raw material flow value was 1.4. In addition, the specific gravity of the formed article was 2.143, and the degree of crystallinity calculated from the equation was 64%.
Experimental Examples 2 to 6 and Comparative Examples 1 to 3
Formed articles were produced in the same manner as in Experimental Example 1, except that the type of PCTFE, the shape of the formed article, and the forming conditions were changed as shown in Table 1.

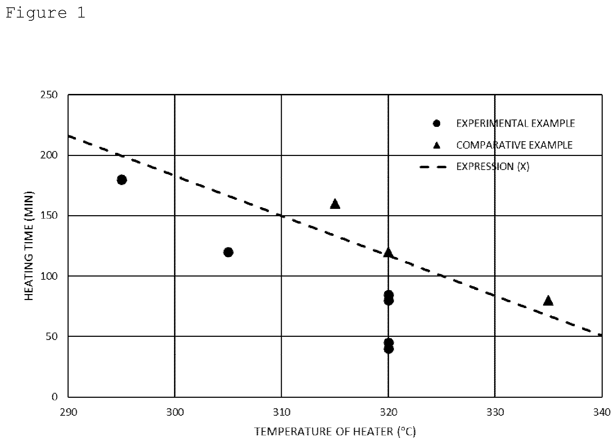

The results are shown in Table 1. Fig. 1 is a graph plotting the temperature of the heater and heating time in the methods for producing the formed articles of Experimental Examples 1 to 6 and Comparative Examples 1 to 3. In Fig. 1, the dashed line represents the graph of the equation:

(Heating time by the heater (minute)) = [1176 - 3.31 $\times$ (Temperature of heater (°C))].

[Table 1]

Table 1

| | Type of PCTFE | Raw material flow value ($F_0$) (ml/s) | Mold diameter (mm) | Projected area of formed article (mm²) | Thickness of formed article (mm) | Temperature of heater (°C) | Heating time (minute) | Pressure applied (MPa) | Cooling method | Flow value of formed article ($F_1$) (ml/s) | Rate of change in flow value | Cracks | Specific gravity | Degree of crystallinity (%) |
|---|---|---|---|---|---|---|---|---|---|---|---|---|---|---|
| Experimental Example 1 | 1 | $7.0 \times 10^{-4}$ | 120 | 11304 | 25 | 320 | 40 | 5 | Air cooling | $1.7 \times 10^{-3}$ | 1.4 | N | 2.143 | 64 |
| Experimental Example 2 | 1 | $7.0 \times 10^{-4}$ | 120 | 11304 | 25 | 305 | 120 | 5 | Air cooling | $1.9 \times 10^{-3}$ | 1.7 | N | 2.132 | 54 |
| Experimental Example 3 | 1 | $7.0 \times 10^{-4}$ | 120 | 11304 | 26 | 320 | 45 | 5 | Air cooling | $2.0 \times 10^{-3}$ | 1.9 | N | 2.144 | 65 |
| Experimental Example 4 | 2 | $5.0 \times 10^{-4}$ | 120 | 11304 | 26 | 320 | 80 | 5 | Air cooling | $2.0 \times 10^{-3}$ | 2.9 | N | 2.142 | 63 |
| Experimental Example 5 | 2 | $5.0 \times 10^{-4}$ | 120 | 11304 | 26 | 320 | 85 | 5 | Water cooling | $1.9 \times 10^{-3}$ | 2.8 | N | 2.140 | 61 |
| Experimental Example 6 | 2 | $5.0 \times 10^{-4}$ | 120 | 11304 | 40 | 295 | 180 | 5 | Water cooling | $1.8 \times 10^{-3}$ | 2.6 | N | 2.143 | 64 |
| Comparative Example 1 | 2 | $5.0 \times 10^{-4 \text{TM}}$ | 120 | 11304 | 30 | 320 | 120 | 5 | Air cooling | $31 \times 10^{-3}$ | 5.2 | Y | 2.146 | 67 |
| Comparative Example 2 | 2 | $5.0 \times 10^{-4}$ | 120 | 11304 | 30 | 335 | 80 | 5 | Air cooling | $2.2 \times 10^{-3}$ | 3.4 | Y | 2.152 | 72 |
| Comparative Example 3 | 2 | $5.0 \times 10^{-4}$ | 120 | 11304 | 40 | 315 | 160 | 5 | Air cooling | $2.8 \times 10^{-3}$ | 4.6 | Y | 2.148 | 68 |

**Claims**

1. A formed article comprising a polychlorotrifluoroethylene, wherein the polychlorotrifluoroethylene has a melting point of 211 to 216°C, and the formed article has a projected area of 1,000 mm$^2$ or more, a thickness of 25 to 50 mm, and a degree of crystallinity of 65% or less.

2. The formed article according to claim 1, wherein the polychlorotrifluoroethylene is a homopolymer of chlorotrifluoroethylene.

3. The formed article according to claim 1 or 2, wherein the flow value of the polychlorotrifluoroethylene measured at 230°C is $2.0 \times 10^{-3}$ ml/sec or less.

4. The formed article according to any one of claims 1 to 3, wherein the formed article is a turntable of a semiconductor cleaning apparatus.

5. The formed article according to any one of claims 1 to 4, wherein the formed article has a projected area of 10,000 to 300,000 mm$^2$, a thickness of 25 to 44 mm, and a degree of crystallinity of 52 to 65%, and the flow value of the polychlorotrifluoroethylene measured at 230°C is $1.0 \times 10^{-3}$ to $2.0 \times 10^{-3}$ ml/sec.

6. A method for producing the formed article according to any one of claims 1 to 5, the method comprising:

   heating a mold with a heater, charging the polychlorotrifluoroethylene into the mold, and compression molding the polychlorotrifluoroethylene in the mold to obtain the formed article,
   wherein the temperature of the heater is set to 290 to 325°C, and
   the heating time by the heater and the temperature of the heater are adjusted so as to satisfy the following relational expression (X):

   (Heating time by heater (min)) < [1176 - 3.31 × (Temperature of heater (°C))].                     Expression (X):

7. The method according to claim 6, wherein a rate of change in flow value calculated by the following equation is 3.0 or less:

$$\text{Rate of change in flow value} = (F_1 - F_0) / F_0$$

   $F_0$: Flow value of the polychlorotrifluoroethylene before being charged into the mold
   $F_1$: Flow value of the polychlorotrifluoroethylene forming the formed article.

Figure 1

Figure 2

(a)

(b)

## INTERNATIONAL SEARCH REPORT

| | International application No. |
|---|---|
| | **PCT/JP2024/023061** |

### A. CLASSIFICATION OF SUBJECT MATTER

**B29C 43/58**(2006.01)i; **B29C 43/34**(2006.01)i
FI:  B29C43/58; B29C43/34

According to International Patent Classification (IPC) or to both national classification and IPC

### B. FIELDS SEARCHED

Minimum documentation searched (classification system followed by classification symbols)

B29C43/58; B29C43/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 01-158047 A (NITTO DENKO CORPORATION) 21 June 1989 (1989-06-21) specification, page 2, upper left column, lines 4-8, page 4, upper right column, line 15 - page 4, lower left column, line 9, table 1 | 1, 2, 4 |
| A | | 3, 5-7 |
| A | JP 2007-023231 A (NTN CORPORATION) 01 February 2007 (2007-02-01) paragraph [0016] | 1-7 |
| A | JP 04-182115 A (NITTO DENKO CORPORATION) 29 June 1992 (1992-06-29) specification, page 1, lower right column, lines 1-5, page 3, upper left column, lines 9-14, table 1 | 1-7 |
| A | JP 2019-104787 A (KUREHA CORP) 27 June 2019 (2019-06-27) paragraphs [0014]-[0016], [0054] | 1-7 |
| A | JP 2010-260216 A (NIHON VALQUA KOGYO KK) 18 November 2010 (2010-11-18) paragraphs [0017], [0050], [0051], fig. 17 | 1-7 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 July 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/023061**

| C. | DOCUMENTS CONSIDERED TO BE RELEVANT | |
|---|---|---|
| Category* | Citation of document, with indication, where appropriate, of the relevant passages | Relevant to claim No. |
| A | JP 2018-187939 A (SUMITOMO BAKELITE CO., LTD.) 29 November 2018 (2018-11-29) paragraphs [0091]-[0094] | 1-7 |

Form PCT/ISA/210 (second sheet) (July 2022)

## INTERNATIONAL SEARCH REPORT
### Information on patent family members

International application No.

**PCT/JP2024/023061**

| Patent document cited in search report | | | Publication date (day/month/year) | Patent family member(s) | Publication date (day/month/year) |
|---|---|---|---|---|---|
| JP | 01-158047 | A | 21 June 1989 | (Family: none) | |
| JP | 2007-023231 | A | 01 February 2007 | (Family: none) | |
| JP | 04-182115 | A | 29 June 1992 | (Family: none) | |
| JP | 2019-104787 | A | 27 June 2019 | US 2021/0171726 A1 paragraphs [0016]-[0018], [0056] | |
| JP | 2010-260216 | A | 18 November 2010 | (Family: none) | |
| JP | 2018-187939 | A | 29 November 2018 | US 2019/0283345 A1 paragraphs [0141]-[0145] EP 3489007 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2738343 A